# EUROPEAN PATENT APPLICATION

(11) **EP 4 483 724 A1**
(43) Date of publication of application: **01.01.2025**
(21) Application number: 23020318.4
(22) Date of filing: 29.06.2023
(51) Int. Cl.: A23L 29/281

(54) **METHOD FOR OBTAINING COLLAGEN EXTRACT FROM BROILER CHICKEN FEET**

(71) Applicant: European Supplements Ltd, London EC1V 2NX (GB)
(72) Inventor: Patrin, Alexey, 1241 Kamnik (SI); Mikhail, Krengel, 1000 Ljubljana (SI)

(57) **Abstract**

This project presents a method for extracting collagen from broiler chicken feet. The process involves several steps, including raw material processing, washing, grinding, hydrolysis, centrifugation, extraction with an acetic acid solution and filtering. During hydrolysis, a 2.0-2.5% acetic acid solution is used at temperatures of 18-25°C for 6-10 hours. Raw material extraction is performed using a 1.5-1.8% acetic acid solution at temperatures of 50-55°C for 45-50 minutes with continuous stirring. This method aims to obtain high-yield collagen extracts from broiler chicken feet while streamlining the production process.

## Description

### Field of Invention.

The present invention relates generally to the food, medical and cosmetics industries. The collagen obtained can be used as thickener for canned products, base for eligible films, stocks, stews, sauces, beverages and addictive in the bakery and confectionery industry. In the medical fields, it can be used for tissues repair, and it finds its application in the production of cosmetics products.

### Background

Existing State of Knowledge: Collagen is a group of proteins that is found exclusively in the animal kingdom. It plays a crucial role in the structural integrity of various tissues such as the dermis, tendons, cartilage, and bone. The structure of collagen can be categorized into primary, secondary, tertiary, and quaternary levels. While the primary, secondary, and tertiary structures of collagen remain identical across different tissues, variations can be observed at the quaternary and submicroscopic levels. Factors like the organism's type, tissue nature, and age can influence the quaternary structure and micro structure of collagen.

Collagen is characterized by its unique amino acid composition, setting it apart from other proteins. It contains a significant amount of glycine, oxyproline, and proline, while tyrosine and methionine a represent in smaller quantities. Notably, collagen has a relatively low sulfur content, with methionine being the sole amino acid containing sulfur. Cysteine, cystine, and tryptophan are absent in collagen. The nitrogen content of collagen distinguishes it from most other proteins, averaging around 17.8%. As a result, the nitrogen-to-protein conversion factor for collagen is 5.62 (100:17.8=5.62).

One notable property of collagen is its ability to form a soluble gel-like substance when heated in hot water. However, when collagen is extracted in hot water under neutral conditions without further processing, only a negligible amount of protein dissolves. Therefore, proper preparation of collagen containing raw materials is essential to obtain collagen with favorable physicochemical qualities.

Collagen preparation involves its degradation, a complex process that breaks down the collagen structure into lower-order elements by various means such as acids, bases, salts, and enzymes. The method of raw material preparation, whether alkaline, acidic, or other, affects the nature of the resulting collagen products. The presence of covalent cross-links in collagen increases with the age of the animal, making it more difficult to dissolve through various treatments. In medicine, particularly in reconstructive surgery, collagen finds extensive use due to its advantageous properties.

Collagen is non-toxic, non-carcinogenic, and exhibits high mechanical strength and resistance to tissue enzymes. It also possesses the ability to stimulate tissue regeneration in the body, giving it an advantage over other bio-polymers like fibrin or gelatin, which are denatured forms of collagen

Currently, collagen extraction from animal sources, such as the feet of broiler chickens, is a widely practiced method in various industries. Collagen is a valuable protein known for its applications in the food, pharmaceutical, and cosmetic industries. Several methods for collagen extraction exist, but they often suffer from certain limitations, such as low yield, extensive production waste, and inefficient technological processes.

Problem of the Existing Knowledge: The existing methods for collagen extraction may result in sub optimal yield, leading to higher production costs and lower profitability. Additionally, the production processes may generate significant waste and require a lengthy technological cycle, hindering efficient production and resource utilization. There is a need for an improved method that addresses these limitations and enables a higher yield of collagen with minimal waste and reduced production time.

It is within this context that the present invention is provided.

### Summary

The invention aims to provide a solution to the limitations of the existing collagen extraction methods. By optimizing the production process through specific parameters, such as temperature, acetic acid concentration, and duration of exposure, the invention offers a method that ensures a yield of at least 70% by weight of the prepared raw material. This higher yield reduces production costs and increases profitability.

Furthermore, the invention minimizes production waste and streamlines the technological cycle, resulting in more efficient collagen extraction. The need for this invention arises from the desire to enhance the productivity, sustainability, and cost-effectiveness of collagen extraction processes. By following the described process involving washing, grinding, hydrolysis, and extraction with acetic acid solution, the invention aims to achieve a high yield of collagen extract while minimizing production waste and reducing the technological cycle.

### Detailed Description and Preferred Embodiments

The following is a detailed description of exemplary embodiments to illustrate the principles of the invention. The embodiments are provided to illustrate aspects of the invention, but the invention is not limited to any embodiment. The scope of the invention encompasses numerous alternatives, modifications and equivalent; it is limited only by the claims.

Numerous specific details are set forth in the following description in order to provide a thorough understanding of the invention. However, the invention may be practiced according to the claims without some or all of these specific details. For the purpose of clarity, technical material that is known in the technical fields related to the invention has not been described in detail so that the invention is not unnecessarily obscured.

### DEFINITIONS:

The terminology used herein is for the purpose of describing particular embodiments only and is not intended to be limiting of the invention.

As used herein, the term "and/or" includes any combinations of one or more of the associated listed items.

As used herein, the singular forms "a," "an," and "the" are intended to include the plural forms as well as the singular forms, unless the context clearly indicates otherwise.

It will be further understood that the terms "comprises" and/or "comprising," when used in this specification, specify the presence of stated features, steps, operations, elements, and/or components, but do not preclude the presence or addition of one or more other features, steps, operations, elements, components, and/or groups thereof.

The terminology used herein is for the purpose of describing particular embodiments only and is not intended to be limiting.

The objective of the provided invention is to develop a straightforward and efficient method for obtaining collagen extract from the feet of broiler chickens using a waste-free method technology. The technical problem is solved through the following method for extracting collagen from broiler chicken feet which involves several stages: raw material processing, washing, grinding, hydrolysis, centrifugation, extraction with an acetic solution and filtering. The hydrolysis process is carried out using a 2.0-2.5% acetic acid solution at a temperature of 18-25 degrees Celsius for a duration of 6-10 hours. The extraction of raw materials is performed with a 1.5-1.8% acetic acid solution at a temperature of 50-55 degrees Celsius while maintaining constant stirring for a period of 45-50 minutes.

### IMPLEMENTAION OF INVENTION

The process involves several steps, including raw material processing, washing, grinding, hydrolysis, centrifugation, extraction with an acetic acid solution and filtering.

Raw Materials: Broiler chickens are processed as raw materials when they reach the age of 5-6 weeks, which is around 35-42 days. At this stage, the newly bred broilers have reached a carcass weight of 1.5-1.8kg. It is important to note that the slaughter products obtained from broiler chickens such as feet, are considered immunological immature raw materials. As a result, they lack antigenicity, meaning that the collagen protein extracted from these raw materials does not trigger allergic reactions.

Purification of Raw Materials: The initial stage involves removing of any impurities from the raw materials to ensure high-quality collages extraction. This purification step aims to eliminate contaminants that may influence the final product.

Washing of Raw Materials: The raw materials undergo washing to ensure cleanliness. This step helps to remove any residual impurities or unwanted substances that may still be present.

Grinding of Raw Materials: The purified and washed chicken's feet are then finely ground or crushed using an electric grinder machine with a hole diameter of 5-6 mm. Grinding can also be done with an electric meat grinder. Grinding facilitates subsequent processing and enhances the effectiveness of hydrolysis and extraction processes.

Hydrolysis: The ground mass obtained should be accurately weighed. Subsequently, a 2.0-2.5% aqueous solution of glacial acetic acid needs to be prepared in a reactor. The ground chicken feet should then be added to the solution in a mass of 1:1:2 to 1:2:1 preferably 1:1. The mixture should be kept at a controlled temperature of 18-25 degrees Celsius and allowed to sit for 6-10 hours with periodic stirring. This will ensure optimal contact between the raw materials and the acetic acid solution.

Centrifugation: The raw material should be rinsed with tap water to remove hydrolysis products, blood, the bulk of the fat and other impurities. Washing on a grid with 2-3 mm-sized holes is both feasible and recommended. The raw material is separated from the rinsing water in a batch centrifuge. The rinsed and separated raw material is weighed.

Extraction: After centrifugation, then the raw materials are ready for extraction. The ground material is immersed in 1.5-1.8% acetic acid solution at a slightly higher temperature of about 50-55 degrees Celsius. This extraction process is accompanied by constant stirring, ensuring efficient contact between the raw material and the solvent. The extraction period lasts for about 40-45 minutes, allowing for maximum recovery of collagen from the raw materials.

Collection: The extract obtained after these production processes is fed into a collector equipped with a heating jacket, which separates the meat and bone meal used as a mineral supplement for fodder purposes.

Purification: The extract is then purified using special filters called DRUK filtration, and the purified extract is collected in another collector equipped with a heating jacket while maintaining an accurate temperature.

End Product: The collagen extract obtained through this method exhibits desirable properties, such as being a colorless, sticky, slightly opalescent liquid at the filtration temperature and transforming into an elastic, transparent jelly at room temperature with long-term stability.

The described implementation of the invention gives a proficient and waste-free method for producing collagen extract from broiler chicken feet. By following these detailed steps, it is possible to achieve a high yield of collagen, with a minimum requirement of 70% by weight, while significantly reducing the overall production time to a range of 10-15 hours.

### EXAMPLES ILLUSTRATING THE INVENTION

Example 1: Raw material preparation such as Broiler chicken feet are separated from 5-6-week-old broiler chicken carcasses. They are sorted to remove sores, calcareous growths, keratinized scaly epidermis residues, scales, feathers, and impurities. The feet are rinsed with tap water in perforated drums to further cleanse them. The purified and rinsed feet are ground using an electric meat grinder, and the resulting mass is weighed. A 2% aqueous solution of glacial acetic acid is prepared in a reactor. The ground feet are loaded into the solution at a 1.2:1 mass ratio. The mixture undergoes hydrolysis for 6 hours at 18°C with periodic stirring. The hydrolyzed raw material is rinsed twice with tap water on a grid with 3 mm-sized holes. This step eliminates hydrolysis byproducts, blood, the majority of fat, and other impurities. The raw material is then separated from the rinsing water using a batch centrifuge.

The rinsed and separated raw material (broiler chicken feet) is weighed after preparation. A 1.3% aqueous solution of glacial acetic acid is prepared at a 1.1:1 ratio to the weight of the raw material. The pH of the mixture is adjusted to 4.1. Extraction is carried out in tilting boilers with mechanical stirrers, maintaining a temperature of 40°C for 45 minutes. The obtained extract is fed into a collection tank equipped with a heating jacket. Meat and bone meal, a byproduct, is discharged into containers for use as a mineral supplement in animal feed. The extract is purified using a filtration system with a preliminary soaping layer of group B perlite. Filtration is accomplished by pressurizing the collection tank, and the purified extract is collected in another collection tank with a heating jacket. The extracted temperature is maintained at 40°C throughout the filtration process. At temperatures ranging from 50°C to 37°C, the extract appears as a colorless, sticky, slightly opalescent liquid. At room temperature (18-25°C), it transforms into a firm, transparent gel that can be preserved for more than a year without syneresis (separation of liquid). The process to obtain the extract takes 11 hours. Using a 1.3% acetic acid solution at 40°C for 45 minutes resulted in an insufficient yield of collagen protein.

Example 2: Broiler chicken feet are separated from 5-6-week-old broiler chicken carcasses. The feet are sorted to remove sores, calcareous growths, keratinized scaly epidermis residues, scales, feathers, and impurities. The sorted feet are rinsed with tap water in perforated drums to further cleanse them. The purified and rinsed feet are ground using a meat grinder, and the resulting mass is weighed. A 2.3% aqueous solution of glacial acetic acid is prepared in a reactor. The ground feet are loaded into the solution at a 1:1.2 mass ratio. The mixture is left for 10 hours at 24°C for hydrolysis, with occasional stirring to maximize contact between the raw material and the acetic acid solution. The hydrolyzed raw material is rinsed with tap water on a grid with 3 mm-sized holes to remove hydrolysis products, blood, the majority of fat, and other impurities. The raw material is then separated from the rinsing water using a batch centrifuge.

The rinsed and separated raw material is accurately weighed. An 1.7% aqueous solution of glacial acetic acid is prepared at a 1:1.2 ratio to the weight of the raw material, with a pH of 4.5. The prepared raw material undergoes extraction in tilting boilers equipped with mechanical stirrers. The temperature of the mixture is maintained at 50°C for 55 minutes. The obtained extract is collected in a tank with a heating jacket, while the meat and bone meal are discharged into containers for use as a mineral supplement. The extract is purified using a pressure filter. A preliminary layer of group B perlite, with a thickness of 30 mm, is applied to the filter fabric. Filtration is accomplished by pressurizing the collection tank, enabling the extract to pass through the filter. The purified extract is collected in another collection tank with a heating jacket, and its temperature is maintained at a steady 50°C during the filtration process. The extraction yield, in gel form, amounts to 80% of the weight of the prepared raw material (purified, rinsed, and ground broiler chicken feet). The extract exhibits desirable characteristics, such as being colorless, slightly opalescent, and sticky at temperatures ranging from 50°C to 37°C. At room temperature (18-25°C), the extract forms a firm, transparent gel that can be preserved without syneresis occurring. The process to obtain the extract takes 16 hours.

Example 3: This example follows the production technology of example 1, but with the following changes:

During hydrolysis, a 1.5% concentration of acetic acid solution is used, and it is kept at room temperature for 6 hours. Utilizing a 1.5% acetic acid concentration and a 6-hour duration at room temperature results in inadequate purification of the raw material and insufficient preparation (softening) for subsequent extraction. If the acetic acid concentration exceeds 2.5% and the hydrolysis process exceeds 10 hours, premature destruction of bone tissue and the washout of calcium, potassium salts, etc., occur. This leads to a decrease in collagen protein yield from the raw material, with a yield below 50 wt.%.

Note: It is important to optimize the acetic acid concentration and duration during hydrolysis to ensure proper purification and preparation of the raw material, while avoiding detrimental effects on bone tissue and yield reduction.

he disclosed method presents improvements in collagen extraction, focusing on specific parameters for hydrolysis, extraction, and purification. The use of a perlite filtration layer and temperature control during filtration further enhances the quality of the extracted collagen.

Unless otherwise defined, all terms (including technical terms) used herein have the same meaning as commonly understood by one having ordinary skill in the art to which this invention belongs. It will be further understood that terms, such as those defined in commonly used dictionaries, should be interpreted as having a meaning that is consistent with their meaning in the context of the relevant art and the present disclosure and will not be interpreted in an idealized or overly formal sense unless expressly so defined herein.

The disclosed embodiments are illustrative, not restrictive. While specific configurations of the method have been described in a specific manner referring to the illustrated embodiments, it is understood that the present invention can be applied to a wide variety of solutions which fit within the scope and spirit of the claims. There are many alternative ways of implementing the invention.

It is to be understood that the embodiments of the invention herein described are merely illustrative of the application of the principles of the invention. Reference herein to details of the illustrated embodiments is not intended to limit the scope of the claims, which themselves recite those features regarded as essential to the invention.

## Claims

1. The method comprises the following stages: raw material purification, rinsing, grinding, hydrolysis, centrifugation, extraction using an acetic acid solution, and purification of the extract.

2. The method of claim 1, wherein Hydrolysis is performed with a 2.0-2.5% acetic acid solution, kept for 6-10 hours at temperatures ranging from 18 to 25°C. The hydrolysis process involves constant stirring.

3. The method of claim 1, wherein Raw material extraction is conducted using a 1.5-1.8% acetic acid solution, maintained at temperatures between 50 and 55°C for a duration of 45-50 minutes. Continuous stirring is applied during extraction.

4. The method of claim 1, wherein the extract is purified by filtration using a filter that incorporates a layer of filtered group B perlite.

5. The method of claim 1, wherein a perlite layer applied to the filter fabric has a thickness ranging from 25 to 30 mm.

6. The method of claim 1, wherein the temperature of the extract is maintained between 50 and 55°C throughout the filtration process.
